# DEMANDE DE BREVET EUROPEEN

(11) **EP 1 850 259 A2**
(43) Date de publication de la demande: **31.10.2007**
(21) Numéro de dépôt: 07290512.8
(22) Date de dépôt: 25.04.2007
(51) Int. Cl.: G06F 21/00, G06F 21/02, G06F 21/20, G06F 21/24

(54) **Dispositif de protection des données et codes exécutables d'un système informatique**

(30) Priorité: 27.04.2006 FR 0603769
(71) Demandeur: Bull S.A.S., 78340 Les Clayes sous Bois (FR)
(72) Inventeur: Martin, René, 91440 Bures sur Yvette (FR); Filee, Alain, 78700 Conflans Saint Honorine (FR)
(74) Mandataire: Debay, Yves

(57) **Abrégé**

Dispositif (1) de protection des données et codes exécutables d'un système informatique quelconque fixe ou portable et ayant un support mémoire à protéger caractérisé en ce que le dispositif (1) de sécurité et de protection est placé physiquement entre le système informatique (2) et le support mémoire (MP) à protéger contenant les données et codes exécutables, pour permettre au système informatique (2) l'accès aux données et codes à protéger après mise en oeuvre des fonctions de protections indépendantes du code machine exécuté par le système informatique (2) et ne nécessitant pour la mise en oeuvre de ces fonctions aucune interaction avec le processeur du système.

## Description

### DOMAINE TECHNIQUE DE L'INVENTION

La présente invention concerne un dispositif de protection des données et codes exécutables d'un système informatique.

### ARRIERE-PLAN TECHNOLOGIQUE DE L'INVENTION

Il est connu des systèmes permettant la protection de données, notamment par exemple la protection de données transmises, et d'assurer l'authentification de façon certaine de la personne qui a transmis un message. Un tel dispositif est connu par exemple par la demande de brevet EP 0 037 762. Toutefois un tel dispositif nécessite d'effectuer un calcul de signature dans un objet portable type carte à puce et de comparer le résultat du calcul effectué avec la signature transmise avec le message, pour ensuite délivrer au monde extérieur un résultat « oui » ou « non », permettant d'authentifier la personne qui a transmis le message comme étant celle qui disposait d'une carte à puce dont les clés secrètes étaient appariées aux clés secrètes du dispositif qui a effectué l'authentification.

Il est également connu par la demande de brevet français FR 2 526 977 un dispositif permettant d'authentifier ou de certifier au moins une information contenue dans une mémoire d'un support électronique. Un tel dispositif et procédé utilise une carte à puce et permet de calculer un résultat à partir de la connaissance de la donnée mémorisée dans le support électronique et d'un paramètre corrélatif à la position de la donnée dans la mémoire du support. Le même calcul est effectué de l'autre coté de la transmission par le dispositif ayant émis les informations et le résultat fourni par un des côtés est comparé pour s'assurer que l'inscription a bien été faite dans la mémoire d'un support électronique portatif tel que la carte.

Un tel dispositif met en oeuvre une communication à distance entre un terminal disposant d'un module de sécurité et une carte à puce dans laquelle on veut inscrire une information envoyée par ce terminal. Ceci ne prend pas en compte les problèmes de sécurité au niveau du système informatique du terminal lui-même, et la certification et l'authentification des données inscrites dans la mémoire du terminal.

Il est également connu par la demande de brevet EP 0 285 520 un procédé et dispositif pour acheminer des clés secrètes entre deux modules sécuritaires reliés par un moyen de communication. Cet acheminement de clés secrètes permet de créer la confidentialité de ces clés en transmettant les clés de façon chiffrées.

Enfin il est également connu par le demande de brevet EP 0 252 850 un procédé et dispositif pour certifier l'authenticité d'une donnée transmise entre deux dispositifs connectés en local ou à distance à travers une ligne de transmission. Le dispositif et le procédé ajoutent à l'information à transmettre une condition prédéterminée indépendante de la valeur de la donnée à transmettre. Cette condition prédéterminée constitue avec l'information à transmettre le message qui est chiffré avant transmission, puis déchiffré à la réception. Le récepteur après déchiffrement sépare le message reçu en deux champs et applique la même condition prédéterminée sur un des deux champs et si cette condition prédéterminée est satisfaite le système considère que la transmission s'est effectuée correctement.

Toutefois la plupart des dispositifs de l'art antérieur ont pour but soit de sécuriser des données transmises d'un terminal vers un autre, soit d'authentifier un émetteur par rapport à un récepteur, soit de permettre l'accès à un service en authentifiant une personne comme étant celle autorisée pour avoir accès au service.

### DESCRIPTION GENERALE DE L'INVENTION

Le but de l'invention contrairement à celui de l'art antérieur est de protéger les données et les codes exécutables d'un système informatique en utilisant une ou plusieurs des fonctionnalités ci-après d'authentification, d'intégrité des codes et des données et de maintien de confidentialité des codes et des données.

Ce but est atteint par le fait que le dispositif de protection des données et codes exécutables d'un système informatique quelconque fixe ou portable et ayant un support mémoire à protéger est caractérisé en ce que le dispositif de sécurité et de protection est placé physiquement entre le système informatique et le support mémoire à protéger contenant les données et codes exécutables, pour permettre au système informatique l'accès aux données et codes à protéger après mise en oeuvre des fonctions de protection indépendantes du code machine exécuté par le système informatique protégé et ne nécessitant pour la mise en oeuvre de ces fonctions aucune interaction avec le processeur du système.

Selon une autre particularité, les fonctions de protection offertes concernent l'autorisation d'accès, l'intégrité et la confidentialité des données et codes à protéger.

Selon une autre particularité, les données et codes sont stockés soit sur un support fixe (par exemple de type RAM, mémoire FLASH,...) soit sur un support amovible (disque dur, clé a mémoire,...).

Selon une autre particularité, le support mémoire peut être partitionné logiquement en plusieurs partitions indépendantes vu comme autant de partition physique par le système.

Selon une autre particularité, le système d'exploitation du dispositif dispose de deux modes d'utilisation indépendants et non simultanés : un mode administrateur et un mode utilisateur.

Selon une autre particularité, le système d'exploitation du dispositif lance le processus d'activation du dispositif lors de sa connexion au système ou sa mise sous tension.

Selon une autre particularité, le processus d'activation nécessite l'authentification de l'utilisateur ou de l'administrateur.

Selon une autre particularité, le système d'exploitation du dispositif met en oeuvre des fonctions de protection indépendants du code machine exécuté par le système informatique protégé.

Selon une autre particularité, les fonctions de protection sont indépendantes de celles du système informatique protégé et ne nécessitent aucune interaction avec le système informatique protégé.

Selon une autre particularité, les interfaces avec le support mémoire et le système informatique sont de type parallèle (bus processeur, PCMCIA,...) ou série (USB, PCI-X,...) ou sans fil (Wireless USB).

Selon une autre particularité, le mode utilisateur permet exclusivement l'accès aux données et codes.

Selon une autre particularité, le mode administrateur permet exclusivement la configuration (en particulier: taille des données d'authentification, mécanismes cryptographiques utilisés, nombre de partitions et attributs, diverses autorisations utilisateur) et la gestion du dispositif.

Selon une autre particularité, l'authentification de l'administrateur est réalisée par le dispositif lui même grâce à des moyens d'interface entre l'administrateur et le dispositif non observables par le système informatique.

Selon une autre particularité, l'authentification de l'utilisateur est réalisée par le système d'exploitation du dispositif lui même avec des moyens non observables par le système informatique.

Selon une autre particularité, les données d'authentification sont soit entièrement générées par le dispositif soit générées en partie par le dispositif et en partie par l'utilisateur (ou l'administrateur). Dans le premier cas le dispositif génère les données d'authentification et les présente à l'utilisateur sur un afficheur intégré au dispositif. Dans le deuxième cas, le dispositif génère un code d'authentification en partie à partir de données internes au dispositif et pour l'autre partie de données saisies par l'utilisateur directement sur le dispositif.

Selon une autre particularité, les données d'authentification sont uniques à chaque dispositif.

Selon une autre particularité les données d'authentification ne sont pas mémorisées dans le dispositif lors de sa mise hors tension. Pour cela le dispositif mémorise uniquement une partie des données ayant été utilisée par la fonction de hachage ayant généré les données d'authentification. La reconstruction des données d'authentification nécessite donc obligatoirement la saisie par l'utilisateur des données manquantes.

Selon une autre particularité, l'authentification de l'utilisateur est suivie de la sélection par l'utilisateur de la ou des partitions accessibles par le système informatique.

Selon une autre particularité, les partitions accessibles sont configurables en nombre, taille et mode d'accès (lecture seule, lecture/écriture) par un administrateur et dont les contrôles sont assurés par des mécanismes cryptographiques réalisés par le dispositif indépendamment du système informatique.

Selon une autre particularité, le droit pour l'utilisateur de modifier la configuration des partitions est également configurable par un administrateur.

Selon une autre particularité, l'accès aux partitions autorisées est réalisé par le système d'exploitation de sécurité et le processeur du dispositif de sécurité lui-même et indépendamment du système.

Selon une autre particularité, la mémoire protégée constituant le système de stockage peut se formater conformément au système d'exploitation du système informatique à protéger tout en n'étant exploitable qu'après authentification préalable de l'utilisateur par le dispositif.

Selon une autre particularité, les partitions autorisées peuvent contenir tout type de code exécutable par le système informatique à protéger (tout type de système d'exploitation, tout type d'application,...) et tout type de données sous forme de système de fichier quelconque.

Selon une autre particularité, la génération des motifs d'intégrité et le contrôle de l'intégrité des codes lus ou écrits par le système informatique est réalisé par le dispositif lui-même et indépendamment du système informatique.

Selon une autre particularité, la génération des motifs d'intégrité et le contrôle de l'intégrité des données lues ou écrites par le système informatique est réalisé par le dispositif lui-même et indépendamment du système informatique.

Selon une autre particularité, la gestion de l'intégrité des données consiste en la mise en oeuvre par le dispositif lui-même de mécanismes cryptographiques entre la mémoire support à protéger et le système informatique.

Selon une autre particularité, la gestion de l'intégrité des codes consiste en la mise en oeuvre par le dispositif lui-même de mécanismes de type signature cryptographique entre la mémoire support à protéger et le système informatique.

Selon une autre particularité, toute détection par le dispositif d'une modification frauduleuse ou intempestive des données ou des codes empêche l'accès par le système aux données ou codes modifiés.

Selon une autre particularité, la protection en confidentialité des données ou des codes lus ou écrits par le système est réalisée par le dispositif lui-même et indépendamment du système informatique.

Selon une autre particularité, la gestion de la confidentialité des données ou des codes consiste en la mise en oeuvre d'un mécanisme cryptographique de chiffrement.

Selon une autre particularité, aucune clé cryptographique utilisée n'est mémorisée en clair dans une quelconque des mémoires du système informatique.

Selon une autre particularité, aucune clé cryptographique n'est transmise en clair sur aucun des bus externes du système intégrant le dispositif.

Selon une autre particularité, le système d'exploitation du dispositif intègre des mécanismes permettant la diffusion sécurisée en intégrité et/ou confidentialité depuis un système central d'une mise à jour sécurisée du code exécuté sur les systèmes cibles ou des données manipulées sur les systèmes cibles.

D'autres particularités et avantages de la présente invention apparaitrons plus clairement à la lecture de la description ci-après faite en référence aux dessins annexés représentatifs d'un mode de réalisation non limitatif de réalisation de l'invention dans lesquels :
- La figure 1 représente soit une puce à circuit constitué soit d'une portion de circuit intégré à fonction sécuritaire (PCIFS), soit d'une puce de sécurité (PuDS), soit d'un dispositif de sécurité (DS) comportant une puce noyée dans un bloc assurant sa sécurité contre toute violation ;
- La figure 2 représente l'utilisation du circuit intégré à fonction de sécurité (PCIFS) dans un système informatique (2) pour accéder à une mémoire protégée ;
- La figure 3 représente l'utilisation d'une puce de sécurité (PuDS) selon l'invention dans un ensemble comportant un système informatique (2) accédant à une mémoire (3) dont on veut protéger les informations ;
- La figure 4 représente un dispositif de sécurité (DS) intégrant la mémoire protégée (3) dans son dispositif et dialoguant avec le processeur (2) d'un système informatique.

### DESCRIPTION D'UN MODE DE REALISATION PREFERE DE L'INVENTION

Dans la suite de l'exposé les termes authentification, intégrité, confidentialité auront les significations suivantes.

Authentification : L'authentification a pour but d'assurer que les codes à exécuter et les données à manipuler contenus dans le dispositif ou protégés par lui sont bien mis à disposition de la bonne personne physique. Cette authentification ne doit pas pouvoir être contournée par une personne ou un système malveillant.

Intégrité des codes et des données : Cette intégrité a pour but d'assurer à la personne physique que les codes et les données présentés par le dispositif sont bien ceux attendus par la personne. Cette intégrité ne doit pas pouvoir être mise en défaut par une personne ou un système malveillant.

Confidentialité des codes et des données : Cette confidentialité a pour but d'assurer que les codes et données ne sont accessibles que lorsque le dispositif est en fonction et que la personne physique a été correctement authentifiée. Cette confidentialité ne doit pas pouvoir être mise en défaut par une personne ou un système malveillant.

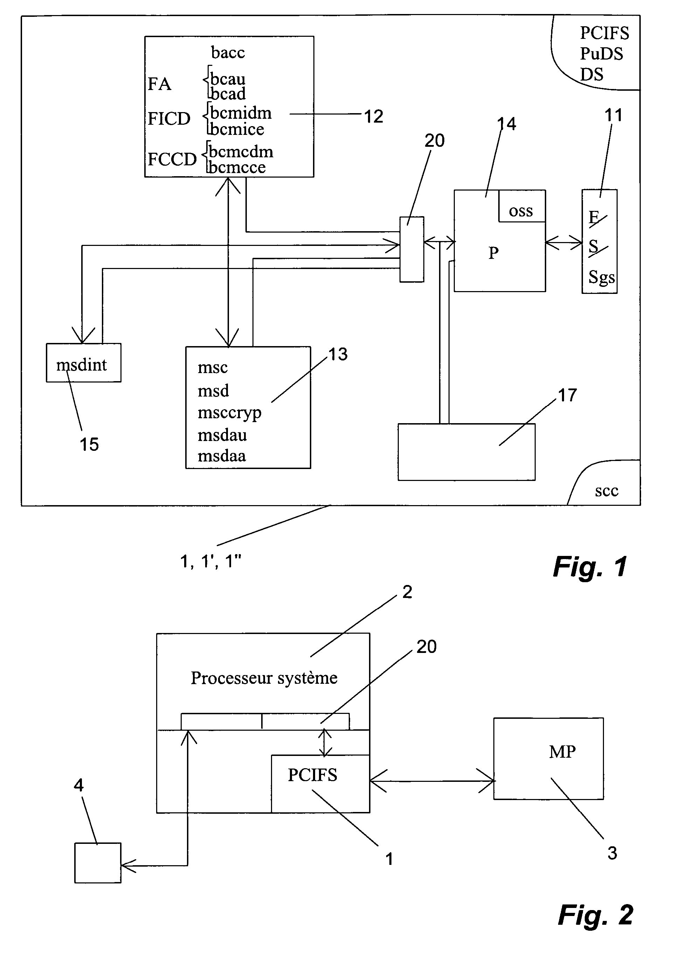

L'invention afin de réaliser tous les points mentionnés s'appuie en premier lieu sur la réalisation d'un composant cryptographique spécifique (1) sous la forme d'un Soc (System on a Chip). Comme illustré sur la figure 1, ce composant (1) intègre plusieurs blocs cryptographiques représentés sous la référence 12, les différents blocs étant en particulier :
- Les blocs cryptographiques permettant de mettre en oeuvre les mécanismes d'intégrité des données manipulées (bcmidm) par le système informatique et les blocs cryptographiques permettant de mettre en oeuvre les mécanismes d'intégrité des codes exécutés (bcmice) par le système informatique. Ces deux blocs permettant la mise en oeuvre de la fonction d'intégrité des codes et données (FICD)
- Les blocs cryptographiques permettant de mettre en oeuvre les mécanismes de confidentialités des données manipulées (bcmcdm) par le système informatique et les blocs cryptographiques permettant de mettre en oeuvre les mécanismes de confidentialités des codes exécutés (bcmcce) par le système informatique. Ces deux blocs permettant la mise en oeuvre de la fonction de confidentialité des codes et données(FCCD)
- Les blocs cryptographiques permettant de réaliser l'authentification de l'utilisateur (bcau) et les blocs cryptographiques permettant de réaliser l'authentification de l'administrateur (bcad). Ces deux blocs permettant la mise en oeuvre de la fonction d'authentification (FA).
- Les blocs cryptographiques assurant la confidentialité du système de clés cryptographiques du dispositif.
- Les blocs cryptographiques assurant l'intégrité du système de clés cryptographiques du dispositif.
- Les blocs algorithmes de générations de clés cryptographiques (bacc).

Ce composant comporte également :
- Un processeur (P) sous une forme synthétisée ou en dur exécutant un système d'exploitation de sécurité(OSS) faisant appel selon les besoins aux fonctions et blocs du composant
- Les mémoires internes permettant la manipulation des données sensibles.

Le dispositif intègre par ailleurs :
- Un système d'Entrées/Sorties (11) reconnu par le système informatique.
- Un média (13) de stockage des données (msd).
- Un média (13) de stockage des codes (msc).
- Un média (13) de stockage des clés cryptographiques (msccryp).
- Un média (13) de stockage des données permettant de réaliser l'authentification de l'utilisateur (msdau).
- Un média (13) de stockage des données permettant de réaliser l'authentification de l'administrateur (msdaa). L'authentification de l'administrateur est réalisée par la saisie sur le dispositif de données d'authentification permettant au dispositif de vérifier une signature cryptographique calculée lors de l'initialisation du dispositif.
- Un média (14) de stockage du code exécuté (OSS) par le processeur P du dispositif de sécurité.
- Un média (15) de stockage des données incluant le stockage d'une signature cryptographique des données mémorisées permettant de vérifier l'intégrité (msdint) du code exécuté par le dispositif. La vérification de l'intégrité est réalisée par calcul, selon le même algorithme cryptographique lors de la lecture des données, d'une signature cryptographique et comparaison avec la signature stockée.
- Un moyen (17) de saisie indépendant du système informatique.

Les interfaces (E/S/Sgs) (11) du dispositif avec le support mémoire (MP) et le système sont de type parallèle (bus processeur, PCMCIA,...) ou série (USB, PCI-X,...) ou sans fil (Wireless USB).

Les médias (13) de stockage des données et codes exécutables pouvant être un support fixe (par exemple de type RAM, mémoire FLASH,...) soit sur un support amovible (disque dur, clé a mémoire,...).

Le fonctionnement de ce dispositif va maintenant être décrit plus en détail.

Le processus d'activation du dispositif de sécurité (1) est réalisé par le système d'exploitation de sécurité lors de sa connexion au système (2) ou à sa mise sous tension.

Le système d'exploitation du dispositif (1) de sécurité met en oeuvre deux modes d'utilisation indépendants et non simultanés lors de son fonctionnement et nécessite pour chacun soit l'authentification de l'utilisateur (mode utilisateur) ou de l'administrateur pour le mode création de l'utilisateur.

Le premier mode est donc le mode administrateur dont l'authentification est générée par le bloc cryptographique (bcad).

Le deuxième mode est le mode utilisateur (bloc cryptographique bcau).

Dans le mode administrateur, lors de la phase de configuration ou d'initialisation du dispositif, il est possible de déterminer en particulier : la taille des données d'authentification, les mécanismes cryptographiques utilisés, le nombre de partitions et attributs, les diverses autorisations pour un utilisateur, la génération des données en partie par le dispositif et en partie par l'utilisateur (ou l'administrateur) ou entièrement par le dispositif. Le droit pour l'utilisateur de modifier la configuration des partitions est également configurable par l'administrateur et tous les éléments résultant de la configuration seront mémorisés pour être exploités par le système d'exploitation de sécurité (OSS) du dispositif.

Lors de la phase d'initialisation du dispositif, une partie au moins des éléments cryptographiques utilisés sont portés à la connaissance de l'utilisateur. Ces éléments sont spécifiques à l'utilisateur et à l'administrateur et sont de plus uniques pour chaque dispositif. Ils devront être fournis au dispositif qui pourra à partir de ces éléments régénérer par des mécanismes *cryptographiques,* par exemple de diversification, un système de clés permettant de réaliser l'authentification de l'utilisateur et ceci indépendamment du système informatique. Un paramètre indiquant au système d'exploitation du dispositif que les données d'authentification sont, soit entièrement générées par le dispositif, soit générées en partie par le dispositif et en partie par l'utilisateur (ou l'administrateur) est mémorisé par l'administrateur lors de la phase d'initialisation.

Lors de l'initialisation du dispositif, dans le premier cas le dispositif génère les données d'authentification et en présente une partie à l'utilisateur sur un afficheur intégré au dispositif. Dans le deuxième cas, le dispositif génère les données d'authentification en partie à partir de données internes au dispositif et pour l'autre partie de données saisies par l'utilisateur directement sur le dispositif.

Afin de rendre ce mécanisme d'authentification indépendant du système informatique (2) et spécifique à chaque dispositif, le dispositif de sécurité (1) va générer un système de clés qui ne sera activable que par la mise à disposition par l'utilisateur d'éléments cryptographiques portés à la connaissance du dispositif lors de la phase de création de l'utilisateur dans le dispositif.

Une fois la création réalisée en mode administrateur le bloc cryptographique (12) est activé et toute utilisation en mode utilisateur ou en mode administrateur nécessite une authentification préalable. Les données d'authentification ne sont pas mémorisées dans le dispositif lors de sa mise hors tension. Pour cela le dispositif mémorise uniquement une partie des données ayant été utilisée par la fonction de hachage qui a généré les données d'authentification. La reconstruction des données d'authentification nécessite donc obligatoirement la saisie par l'utilisateur des données manquantes.

Une fois le bloc cryptographique (12) activé, ce dernier agit avec le processeur (P) du dispositif de sécurité (1) en coupure physique des médias de stockage des codes (msc) et données (msd) et peut donner ou non la visibilité de ceux ci au système informatique. Les accès à ces médias ne pourront pas être réalisés directement par le système informatique mais toujours et obligatoirement à travers le composant cryptographique (12) qu'après authentification.

Le champ d'application du composant (1) concerne tout système d'information dans lequel un processeur quelconque accède à un quelconque support de mémoire externe (4) à protéger contenant le code à exécuter ainsi que les données à manipuler. L'invention permet de disposer dans un seul dispositif, interposé entre le processeur système (P) et la mémoire a protéger (MP), de l'ensemble des fonctions de sécurité qui vont permettre, avant de transmettre l'information contenue dans la mémoire (3) au processeur (P), de contrôler le droit d'accès et l'intégrité du code ou des données ainsi que d'assurer leur protection en confidentialité et/ou en intégrité. Le dispositif comporte en plus de la fonctionnalité de vérification d'intégrité une fonction empêchant, lors de la détection d'une modification frauduleuse ou intempestive des données ou des codes, l'accès par le système aux données ou codes modifiés.

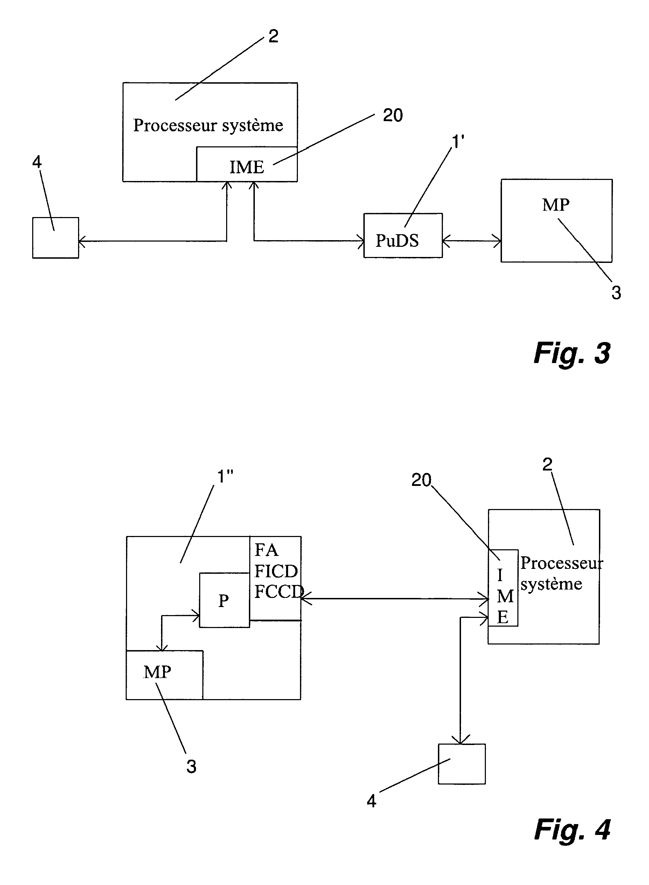

Selon la technologie utilisée et le niveau d'intégration désiré le composant ou la partie de composant c'est-à-dire la portion de circuit intégré à fonctions sécuritaires (PCIFS), ou la puce de sécurité (PuDS) ou le dispositif de sécurité (DS), formant le dispositif peut être implémenté :
1. Comme un bloc d'IP ('Intellectual Property Bloc') VHDL intégré (1) à un circuit intégré conçu pour l'application spécifique (ASIC pour Application Specific Integrated Circuit) ou un réseau de portes logiques programmable (FPGA pour Field Programmable Gate Array) entre l'interface d'accès à la mémoire protégée MP (3) et le bus mémoire externe (20) de l'ASIC ou du FPGA comme représenté à la figure 2.
2. Comme un composant séparé (1') ASIC ou FPGA situé entre la mémoire protégée MP (3) et le bus mémoire externe (20) du processeur (2) comme représenté à la figure 3.
3. Comme un dispositif externe et amovible (1 ") intégrant le dispositif de sécurité et la mémoire protégée MP (3) situé sur une interface de mémoire externe (20) du système à processeur (2) comme représenté à la figure 4.

Il doit être évident pour l'homme du métier que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif (1) de protection des données et codes exécutables d'un système informatique quelconque fixe ou portable et ayant un support mémoire à protéger **caractérisé en ce que** le dispositif (1) de sécurité et de protection est placé physiquement entre le système informatique (2) et le support mémoire (MP) à protéger contenant les données et codes exécutables, pour permettre au système informatique (2) l'accès aux données et codes à protéger après mise en oeuvre des fonctions de protections indépendantes du code machine exécuté par le système informatique (2) et ne nécessitant pour la mise en oeuvre de ces fonctions aucune interaction avec le processeur du système.

2. Dispositif (1) selon la revendication 1 **caractérisé en ce que** les fonctions de protections offertes concernent l'autorisation d'accès, l'intégrité et la confidentialité des données et codes à protéger.

3. Dispositif (1) selon une des revendications 1 à 2 **caractérisé en ce que** les données et codes sont stockés soit sur un support fixe (13) (par exemple de type RAM, mémoire FLASH,...) soit sur un support amovible (13) (disque dur, clé a mémoire,...).

4. Dispositif (1) selon une des revendications 1 à 3 **caractérisé en ce que** le support mémoire (13) peut être partitionné logiquement en plusieurs partitions indépendantes vu comme autant de partition physique par le système.

5. Dispositif (1) selon une des revendications 1 à 4 **caractérisé en ce qu'**il dispose de deux modes d'utilisation indépendants et non simultanés : un mode administrateur et un mode utilisateur.

6. Dispositif (1) selon une des revendications 1 à 5 **caractérisé en ce que** le système d'exploitation du dispositif lance le processus d'activation du dispositif lors de sa connexion au système ou sa mise sous tension.

7. Dispositif (1) selon la revendication 6 **caractérisé en ce que** le processus d'activation nécessite l'authentification de l'utilisateur ou de l'administrateur.

8. Dispositif (1) selon une des revendications 1 à 7 **caractérisé en ce que** le système d'exploitation du dispositif met en oeuvre des fonctions de protection indépendantes du code machine exécuté par le système informatique (2).

9. Dispositif (1) selon la revendication 8 **caractérisé en ce que** ses fonctions de protection sont indépendantes de celles du système informatique (2) protégé et ne nécessitent aucune interaction avec le système informatique (2) protégé.

10. Dispositif (1) selon une des revendications 1 à 9 **caractérisé en ce que** les interfaces avec le support mémoire et le système sont de type parallèle (bus processeur, PCMCIA,...) ou série (USB, PCI-X,...) ou sans fil (Wireless USB,...).

11. Dispositif (1) selon la revendication 5 **caractérisé en ce que** le mode utilisateur permet exclusivement l'accès aux données et codes.

12. Dispositif (1) selon la revendication 5 **caractérisé en ce que** le mode administrateur permet exclusivement la configuration et la gestion du dispositif.

13. Dispositif (1) selon la revendication 5 **caractérisé en ce que** l'authentification de l'administrateur est réalisée par le dispositif lui même grâce à des moyens d'interface entre l'administrateur et le dispositif non observables par le système informatique.

14. Dispositif (1) selon la revendication 7 **caractérisé en ce que** l'authentification de l'utilisateur est réalisée par le système d'exploitation du dispositif lui même avec des moyens non observables par le système informatique.

15. Dispositif (1) selon la revendication 7 **caractérisé en ce que** les données d'authentification sont soit entièrement générées par le dispositif soit générées en partie par le dispositif et en partie par l'utilisateur ou l'administrateur.

16. Dispositif (1) selon la revendication 15 **caractérisé en ce que** les données d'authentification sont uniques à chaque dispositif.

17. Dispositif (1) selon la revendication 15 **caractérisé en ce que** les données d'authentification ne sont pas toutes mémorisées dans le dispositif lors de sa mise hors tension.

18. Dispositif (1) selon la revendication 7 **caractérisé en ce que** l'authentification de l'utilisateur peut être suivie de la sélection par l'utilisateur de la ou des partitions accessibles par le système informatique.

19. Dispositif (1) selon une des revendications 1 à 18 **caractérisé en ce que** les partitions accessibles sont configurables en nombre, taille et mode d'accès (lecture seule, lecture/écriture) par un administrateur et dont les contrôles sont assurés par des mécanismes cryptographiques réalisés par le dispositif indépendamment du système informatique.

20. Dispositif (1) selon une des revendications 1 à 19 **caractérisé en ce que** le droit pour l'utilisateur de modifier la configuration des partitions est également configurable par un administrateur

21. Dispositif (1) selon la revendication 20 **caractérisé en ce que** l'accès aux partitions autorisées est réalisé par le système d'exploitation de sécurité et le processeur du dispositif de sécurité lui-même et indépendamment du système informatique.

22. Dispositif (1) selon la revendication 3 ou 4 **caractérisé en ce que** la mémoire à protéger constituant le système de stockage peut se formater conformément au système d'exploitation du système informatique tout en n'étant exploitable qu'après authentification préalable de l'utilisateur par le dispositif.

23. Dispositif (1) selon la revendication 21 **caractérisé en ce que** les partitions autorisées peuvent contenir tout type de code exécutable par le système informatique (tout type de système d'exploitation, tout types d'applications,...) et tout type de données sous forme de système de fichier quelconque.

24. Dispositif (1) selon une des revendications 1 à 23 **caractérisé en ce que** la génération des motifs d'intégrité et le contrôle de l'intégrité des codes lus ou écrits par le système informatique est réalisé par le dispositif lui-même et indépendamment du système informatique.

25. Dispositif (1) selon une des revendications 1 à 23 **caractérisé en ce que** la génération des motifs d'intégrité et le contrôle de l'intégrité des données lues ou écrites par le système informatique est réalisé par le dispositif lui-même et indépendamment du système informatique.

26. Dispositif (1) selon une des revendications 1 à 23 **caractérisé en ce que** la gestion de l'intégrité des données consiste en la mise en oeuvre par le dispositif de mécanismes cryptographiques entre la mémoire support à protéger et le système informatique.

27. Dispositif (1) selon une des revendications 1 à 23 **caractérisé en ce que** la gestion de l'intégrité des codes consiste en la mise en oeuvre par le dispositif de mécanismes cryptographiques entre la mémoire support à protéger et le système informatique.

28. Dispositif (1) selon une des revendications 1 à 27 **caractérisé en ce que** toute détection par le dispositif d'une modification frauduleuse ou intempestive des données ou des codes empêche l'accès par le système aux données ou codes modifiés.

29. Dispositif (1) selon une des revendications 1 à 28 **caractérisé en ce que** la protection en confidentialité des données ou des codes lus ou écrits par le système est réalisée par le dispositif lui-même et indépendamment du système informatique.

30. Dispositif (1) selon une des revendications 1 à 29 **caractérisé en ce que** la gestion de la confidentialité des données ou des codes consiste en la mise en oeuvre d'un mécanisme cryptographique de chiffrement.

31. Dispositif (1) selon la revendication 30 **caractérisé en ce que** aucune clé cryptographique utilisée n'est mémorisée en clair dans une quelconque des mémoires du système informatique.

32. Dispositif (1) selon la revendication 30 **caractérisé en ce que** aucune clé cryptographique n'est transmise en clair sur aucun des bus externes du système intégrant le dispositif.

33. Dispositif (1) selon une des revendications 1 à 32 **caractérisé en ce que** le système d'exploitation du dispositif intègre des mécanismes permettant la diffusion sécurisée en intégrité et/ou confidentialité depuis un système central d'une mise à jour sécurisée du code exécuté sur les systèmes cibles ou des données manipulées sur les systèmes cibles.
